Europäisches Patentamt

European Patent Office

Office européen des brevets

(11) Veröffentlichungsnummer: **0 136 446**
**B1**

(12) **EUROPÄISCHE PATENTSCHRIFT**

(45) Veröffentlichungstag der Patentschrift:
05.11.86

(51) Int. Cl.⁴: **B 65 G 27/08**, B 65 G 27/04

(21) Anmeldenummer: 84108772.9

(22) Anmeldetag: 25.07.84

(54) **Vibrationsförderer.**

(30) Priorität: 29.08.83 DE 3331050

(43) Veröffentlichungstag der Anmeldung:
10.04.85 Patentblatt 85/15

(45) Bekanntmachung des Hinweises auf die Patenterteilung:
05.11.86 Patentblatt 86/45

(84) Benannte Vertragsstaaten:
AT BE CH DE FR GB IT LI LU NL SE

(56) Entgegenhaltungen:
AT-B-263 636
US-A-2 102 826
US-A-2 939 567
US-A-3 084 782

MASCHINENMARKT, Band 88, Nr. 4, 1982,
Würzburg D. HABENICHT UND H. AHRENS
"Sichere Vibrationsförderer für die Montage:
Entwicklungsstand und Tendenz", Seiten 34-37

(73) Patentinhaber: Rhein- Nadel Automation
Gesellschaft mit beschränkter Haftung,
Reichsweg 19- 42, D-5100 Aachen (DE)

(72) Erfinder: Grief, Norbert, Rollefstrasse 69, D-5100
Aachen (DE)

(74) Vertreter: Rieder, Hans- Joachim, Dr.,
Corneliusstrasse 45 Postfach 11 04 51, D-5600
Wuppertal 11 (DE)

EP 0 136 446 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung gemäß Gattungsbegriff des Hauptanspruches; eine Vorrichtung dieser Art ist beispielweise aus der US-A-2 939 567 bekannt.

Entsprechende Vibrationsförderer werden vornehmlich zum Zubringen von Werkstücken zu Werkstückbearbeitungsm aschinen eingesetzt, teils als Vibrations-Wendelförderer und teils als Vibrations-Linearförderer. Die Erstreckungsrichtung der die Werkstück-Führungsbahn tragenden Blattfedern liegt schräg aufwärts. Dies bedingt, daß der Schwingung eine schräg aufwärts gerichtete Komponente innewohnt. Diese führt zu einem Wurfeffekt auf das Werkstück. Dies bringt eine erhebliche Lärm belästigung, schmälert die Leistung, erhöht den Verschleiß und bringt auch die Gefahr einer gewissen Beschädigung der Werkstückoberfläche bei relativ empfindlichen Werkstücken. Zur Vermeidung dieser Nachteile hat man bereits versucht, alternative Schwing-Zuführsysteme zu entwickeln ("Maschinenmarkt" 1982 4 S.34-37) die diese Wurfbewegung bis auf einen Mikrowurf reduzieren bzw. die entsprechende Aufwärtskomponente der Schwingung so weit herabsetzen in Relation zum Werkstück, daß das Werkstück in einem ständigen Kontakt zur Werkstück-Führungsbahn bleibt. Der Aufprall und die damit verbundene Lärm belästigung ist beseitigt. Die Förderleistung dieser Lösung ist jedoch äußerst gering und es ist eine spezifische Anpassung der Bewegung und/oder des Antriebes an die verschiedensten Werkstücke notwendig. Die zwar erheblich reduzierte aber im mer noch auftretende Aufwärtskomponente der Schwingung verhindert aber z. B. auch nicht, daß sich kantenseitig relativ dünne W erkstücke bei der Förderung noch übereinanderschieben. Das beeinträchtigt die Fähigkeit dieser Förderer zur sicheren Vereinzelung der einer Bearbeitungsmaschine zugeführten Werkstücke.

Aufgabe der Erfindung ist es, eine gattungsgemäße Vorrichtung ohne zusätzlichen Aufwand so auszugestalten, daß die vorerwähnten Nachteile vermieden sind.

Gelöst ist diese Aufgabe durch die im Kennzeichen des Hauptanspruches angegebene Erfindung. Die Unteransprüche stellen vorteilhafte Weiterbildungen dar.

Zufolge dieser Ausgestaltung ist erreicht, daß ungeachtet der relativ groß zu haltenden Amplitude der Schwingung in dieser Schwingung keine in Aufwärtsrichtung liegende Komponente mehr auftritt. Weitestgehend unabhängig vom geförderten Werkstück bleibt dieses also im ständigen Kontakt mit der Werkstück-Führungsbahn. Die Förderleistung ist größer als diejenige der gattungsgemäßen, mit der Wurfkomponente arbeitenden Förderern. Es tritt trotz dieser großen Förderleistung keine Beschädigungsgefahr für die Werkstücke bzw. Lärmentwicklung auf, auch nicht das bei den alternativen Schwing-Zuführsystemen noch in Kauf zunehmende Übereinanderschieben einzelner kantenseitig dünner Werkstücke. Die abwechselnde Zuordnung der Enden der Blattfedern führt zu einer absoluten Linearbewegung jedes Punktes der Werkstück-Führungsbahn. Es entfällt dadurch auch jede seitwärts gerichtete Förderkomponente. Ein entsprechend einer vorteilhaften Weiterbildung der Erfindung am Grundgestell vorgesehenes Rückstoß-Widerlagergewicht steigert die Leistung bzw. erleichtert die Auswahl eines geeigneten Vibrationsantriebes. Es beeinflußt den Effekt, welcher die Förderrichtung der Werkstücke bestimmt, nämlich dahingehend, daß sich das Werkstück in der Richtung bewegt, in welcher die Verlagerungsgeschwindigkeit der Werkstück-Führungsbahn kleiner ist als die Verlagerungsgeschwindigkeit in umgekehrter Richtung, d. h. die aus der Rücksteligeschwindigkeit der Federn resultierende Verlagerung. Die Anordnung des Schwingankers eines entsprechenden Magnetantriebes zwischen zwei Blattfedern auf Höhe der Schwingungsebene ist die günstigste räumliche Zuordnung und verm eidet auch jede die Schwingung der Blattfedern ungünstig beeinflussende Hebelwirkung. Zufolge des ständigen Kontaktes der Werkstücke zur Werkstück-Führungsbahn derart, daß sogar ein Übereinanderschieben sehr flacher W erkstücke vermieden ist, ergibt sich die für den Einsatz solcher Förderer günstige Lösungsmöglichkeit, die Führungsbahn als Schiene mit übergriffenen Nutrandkanten auszubilden. Solche Nutrandkanten zum führenden Eintritt der Werkstückflanken beeinträchtigen wegen des ständigen Kontaktes der Werkstücke zur Werkstück-Führungsbahn auch nicht die förderleistung.

Im Folgenden wird die Erfindung anhand eines in den Zeichnungen dargestelten Ausführungsbeispieles beschrieben. Es zeigen:

Fig. 1 eine perspektivische Darstellung der erfindungsgemäßen Vorrichtung,

Fig. 2 eine Seitenansicht der Vorrichtung,

Fig. 3 eine Draufsicht auf die gesamte Vorrichtung,

Fig. 4 einen Schnitt längs IV-IV der Fig. 2 und

Fig. 5 einen Schnitt durch die Werkstück-Zuführungsbahn der Fig. 4 in vergrößerter Darstellung der Werkstück-Zuführungsbahn.

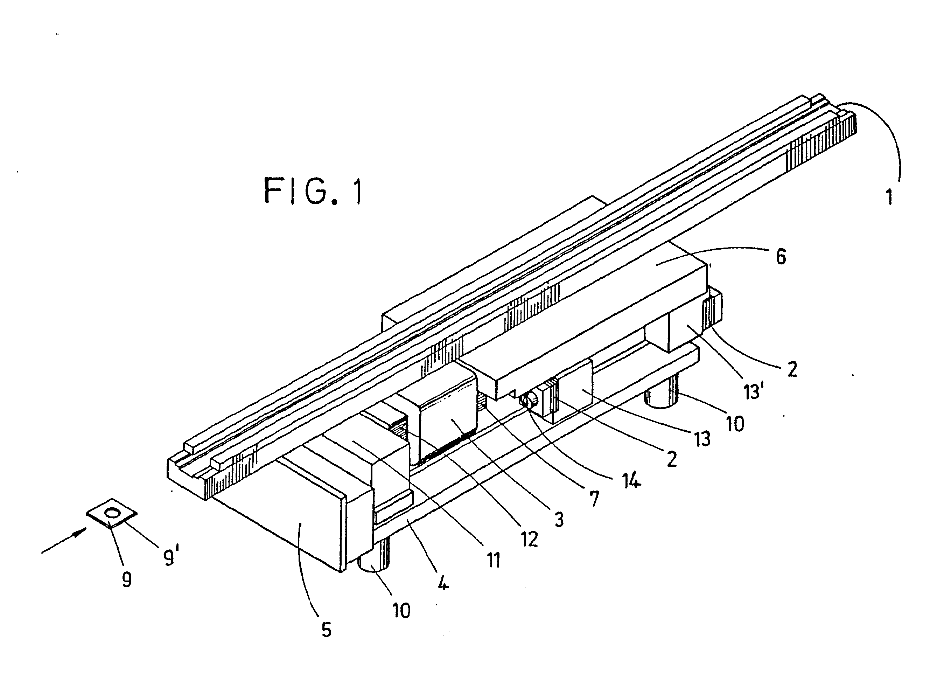

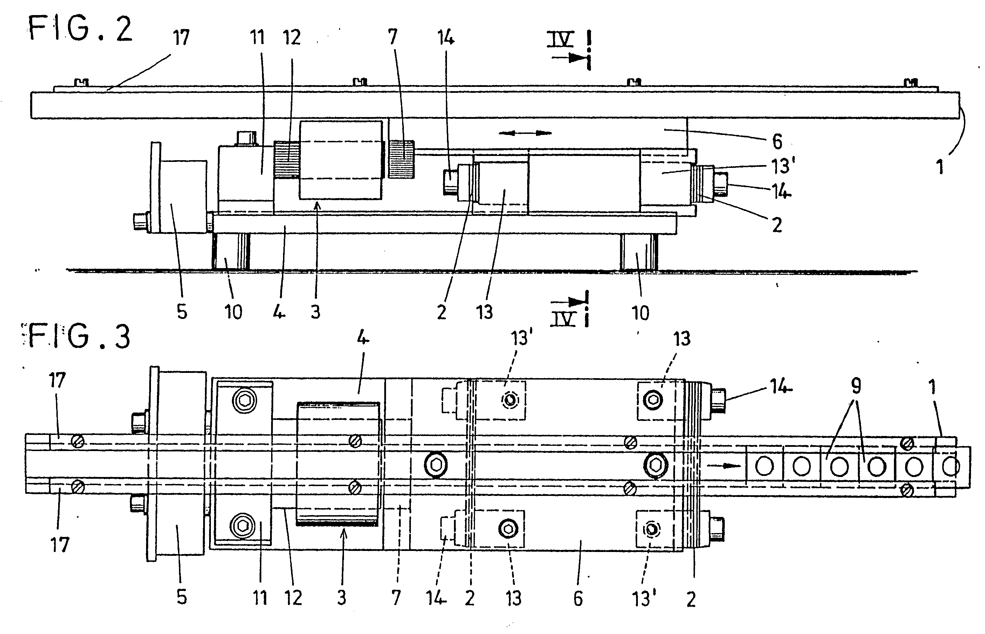

Die in den Fig. 1 und 2 gezeigte Vorrichtung besitzt eine auf vier elastischen Puffern 10 stehende rechteckige Grundplatte 4, an der einerends eine Konsole 11 zur horizontalen Aufnahme des Magnetkernes 12 und somit Befestigung des Elektromagneten 3, andererends zwei Federwiderlager 13 angeordnet sind, die ihrerseits mit dem Tisch 6 verbunden sind und der letztere auf seiner Oberseite vorzugsweise mittig eine Werkstück-Führungsbahn 1 trägt. Der Tisch 6 ist mit dem als Elektromagnet 3 ausgebildeten Vibrationsantrieb an seiner Unterseite mittels eines sich etwa in Höhe der Federschwingungsebene befindlichen Schwingankers 7 verbunden, dessen Querschnittsmaß demjenigen des Magnetkerns 12 entspricht.

Die sich quer zur Werkstück-Führungsbahn 1 erstreckenden, parallel zu ihr schwingenden und die erforderliche Rückstellkraft bewirkenden Blattfedern 2 sind von den beiden Federwiderlagern 13 getragen und mit ihnen verbunden. Die zwei der Anordnung der Blattfedern 2 entsprechend quer zur Längsausdehnung der Werkstück-Führungsbahn 1 angeordneten Federwiderlager 13 stellen eine federnde Verbindung zwischen der Grundplatte 4 und dem die Werkstück-Führungsbahn 1 tragenden Tisch 6 her, indem sie einerseits mit der Grundplatte 4 und andererseits mit dem tragenden Tisch 6 verbunden sind, wobei die tischseitigen Verbindungsstellen von an der Tischunterseite festgelegten Federwiderlagern 13' gebildet sind, und zwar wechselweise auf zwei gegenüberliegenden Seiten der Werkstück-Führungsbahn 1.

Die Werkstück-Führungsbahn 1 ist mit dem Tisch 6 fest verbunden, wobei eine Versteilmöglichkeit der Werkstück-Führungsbahn 1 zum tragenden Tisch 6 in Längsrichtung gegeben ist.

An der der Förderrichtung abgekehrten Seite der Grundplatte 4 befindet sich ein fest mit ihr verbundenes, als ein Metallblock ausgebildetes Rückstoßwiderlagergewicht 5.

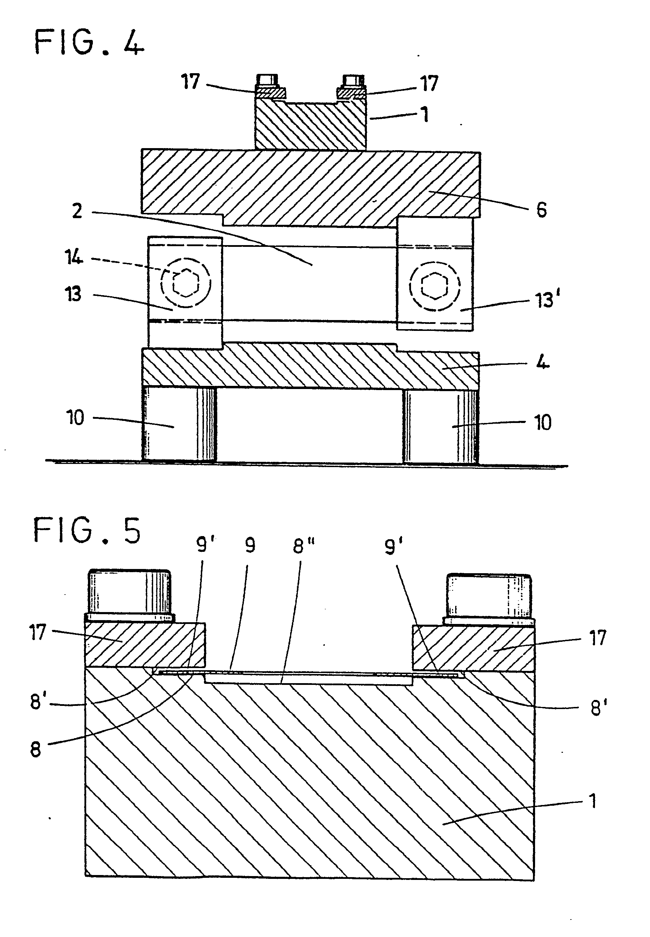

Die in Fig. 5 gezeigte Werkstück-Führungsbahn 1 ist derart ausgebildet, daß von ihrer Oberseite eine Nut 8 ausgeht, deren Nutrandkanten 8' durch zwei längs der Werkstück-Führungsbahn 1 verlaufenden und mit ihr verbundenen Leisten 17 überdeckt sind. Die Nut 8 ist gestuft ausgebildet, mit einer mittleren Vertiefung 8'', so daß die zu befördernden Werkstücke nur randseitig auf der Werkstück-Führungsbahn 1 aufliegen.

**Patentansprüche**

1. Vibrationsförderer mit einerends von einem Grundgestell (4) ausgehenden und anderenends eine Werkstück-Führungsbahn (1) tragenden Blattfedern (2) und mit einem die Werkstück-Führungsbahn (1) bewegenden Vibrationsantrieb (3), dadurch gekennzeichnet, daß die Schwingungsebene der Blattfedern (2) parallel zur Werkstück-Führungsbahn (1) liegt, wobei die grundgestellseitigen Enden und die werkstückführungsbahnseitigen Enden zweiter Blattfedern (2) wechselweise auf gegenüberliegenden Seiten der Werkstück-Führungsbahn (1) festgelegt sind.

2. Vorrichtung nach Anspruch 1, dadurch gekennzeichnet, daß das den Vibrationsantrieb tragende Grundgestell (4) an der der Förderrichtung abgekehrten Seite ein Rückstoß-Widerlagergewicht (5) trägt.

3. Vorrichtung nach Anspruch 1 und 2, dadurch gekennzeichnet, daß der Schwinganker (7) des als Magnetantrieb ausgebildeten Vibrationsantriebes auf Höhe der Schwingungsebene der Blattfedern (2) zwischen zwei benachbarten Federswiderladern (13, 13') einer Blattfeder (2) liegt.

4. Vorrichtung nach Anspruch 1, dadurch gekennzeichnet, daß die Werkstück-Führungsbahn (1) als Schiene mit übergriffenen Nutrandkanten (8') zum führenden Eintritt der Werkstückflanken (9') ausgebildet ist.

**Claims**

1. A vibratory conveyor having leaf springs (2) extending at one end from a base (4) and at the other end carrying a workpiece guideway (1) and having a vibratory drive (3) which moves the workpiece guideway (1), characterized in that the plane of oscillation of the leaf springs (2) lies in parallel with the workpiece guideway (1), the ends of two leaf springs (2) next the base and the ends next the workpiece guideway being fixed alternately on opposite sides of the workpiece guideway (1).

2. A mechanism as in Claim 1, characterized in that the base (4) carrying the vibratory drive carries on the side remote from the direction of conveyance a recoil counterweight (5).

3. A mechanism as in Claim 1 and 2, characterized in that the oscillating core (7) of the vibratory drive which is made as a magnetic drive, lies at the height of the plane of oscillation of the leaf springs (2) between two adjacent spring bearing brackets (13, 13') of one leaf spring (2).

4. A mechanism as in Claim 1, characterized in that the workpiece guideway (1) is made as a rail having overlapped cornergrooves (8') for the guiding entry of the flanks (9') of the workpieces.

**Revendications**

1.- Transporteur à vibrations comportant des lames élastiques (2) faisant saillie à une extrémité d'un bâti de base (4) et portant, à l'autre extrémité, une voie de guidage de pièces (1) ainsi qu'un dispositif d'entraînement en vibration (3) déplaçant la voie de guidage de pièces (1), caractérisé en ce que le plan d'oscillation des lames élastiques (2) est parallèle à la voie de guidage de pièces (1), les extrémités de deux lames élastiques (2) qui sont respectivement placées du côté du bâti et du côté de la voie de guidage de pièces étant fixées alternativement sur des côtés opposées de la voie de guidage de pièces (1).

2.- Dispositif selon la revendication (1), caractérisé en ce que le bâti de base (4) portant le dispositif d'entraînement en vibration porte, sur la face opposée à la direction de transport, un contrepoids de réaction (5).

3.- Dispositif selon l'une des revendications 1 ou 2, caractérisé en ce que l'armature oscillante (7) du dispositif d'entraînement en vibration, agencée comme un dispositif d'entraînement magnétique, est placée à la hauteur du plan d'oscillation des lames élastiques (2) entre deux contreappuis élastiques adjacents (13, 13') d'une lame élastique (2).

4.- Dispositif selon la revendication 1, caractérisé en ce que la voie de guidage de pièces (1) est agencée sous forme d'un rail comportant des arêtes de bordure recouvertes (8') servant à guider l'introduction des flancs de pièces (9').

FIG. 1

0 136 446

FIG. 2

FIG. 3

# FIG. 4

# FIG. 5